# EUROPÄISCHE PATENTANMELDUNG

(11) **EP 1 454 972 A1**
(43) Veröffentlichungstag der Anmeldung: **08.09.2004**
(21) Anmeldenummer: 04100451.6
(22) Anmeldetag: 06.02.2004
(51) Int. Cl.: C09J 7/02, B60R 21/20

(54) **Selbstklebende Abdeckung zur Verklebung über Kanten**

(30) Priorität: 07.03.2003 DE 20303685 U
(71) Anmelder: Schreiner Group GmbH & Co. KG, 85764 Oberschleissheim (DE)
(72) Erfinder: Hufnagel, Volker, Dr., 82211 Herrsching (DE)
(74) Vertreter: Kehl, Günther

(57) **Zusammenfassung**

Selbstklebende d nnfl chige Abdeckung, deren selbstklebende Bereiche aus mindestens zwei Klebstoffen (2, 3) mit unterschiedlichen Hafteigenschaften bestehen, zur Verklebung ber eine Kante. Um eine Verklebung herzustellen, die sowohl eine hohe Anfangshaftung als auch ein dauerhaftes Verbleiben der Abdeckung auf einem Geh use erm glicht, ist vorgesehen, dass mindestens einer der Klebstoffe (2) eine hohe Anfangshaftung aufweist.

## Beschreibung

Die Erfindung betrifft eine selbstklebende Abdeckung, die über Kanten verklebt wird. Insbesondere ist sie als Abdeckung für ein Airbag-Gehäuse vorgesehen.

Airbags werden in Fahrzeuge komplett mit einem Gehäuse verbaut. Meist handelt es sich dabei um Kunststoff- oder Metallgehäuse, in die der gefaltete Airbag eingefügt wird und die sodann mit einer (gewöhnlicherweise dünnflächigen, d.h. folienartigen) Abdeckung versehen werden. Derartige Abdeckungen müssen folgende Eigenschaften aufweisen:
- Sie müssen genau an vorgesehenen Sollreißstellen aufreißen, wenn der Airbag gezündet wird.
- Sie müssen andererseits eine hohe Stabilität aufweisen, um zu gewährleisten, dass der eingeschlossene Airbag sicher aufbewahrt ist.
- Sie müssen ebenso stabil am Gehäuse angebracht sein.
- Sie müssen diese Eigenschaften auf Dauer beibehalten.

Mehr und mehr kommen im Bereich der Abdeckungen Selbstklebelösungen zur Anwendung. Durch eine geeignete Materialauswahl kann eine ausreichende Stabilität der Abdeckung in sich erreicht werden.

Ein grundlegendes Problem stellt hingegen die dauerhafte Anbringung der Abdeckung auf dem Gehäuse dar: Beispielsweise haftet eine Airbag-Abdeckung, die im Verklebebereich mit einem langzeit- und temperaturstabilen Klebstoff mit geringer Anfangshaftung ausgerüstet ist, nicht bei einer Temperatur von unter -35° C. Umgekehrt zieht ein Klebstoff mit hoher Anfangshaftung aufgrund der Rückstellkräfte des Materials der Abdeckung nach zweistündiger Temperaturlagerung bei 80° C Fäden und löst sich vom Gehäuse.

Es besteht also das Problem, eine Verklebung herzustellen, die sowohl eine hohe Anfangshaftung als auch ein dauerhaftes Verbleiben der Abdeckung auf dem Gehäuse ermöglicht. Weiterhin ist zu gewährleisten, dass das Temperaturspektrum der Kleberverbindung sehr breit angelegt ist. Ein besonderes Problem stellen dabei die Rückstellkräfte des Abdeckmaterials dar, das über die Kanten des Gehäuses verklebt ist. Klebstoffe mit einem derart breiten Anforderungsprofil sind als Stand der Technik nicht bekannt.

Es ist die Aufgabe dieser Erfindung, die stabile Anbringung der Airbag-Abdeckung auf dem Gehäuse sicherzustellen. Dies wird durch die Kombination mindestens zweier unterschiedlicher Klebstoffe erreicht, die sich in ihren Eigenschaften derart vorteilhaft ergänzen, dass das gesamte Anforderungsspektrum für eine solide, dauerhafte und sofort einsetzende Verklebung über eine Kante abgedeckt wird:

Ein erster Haftklebstoff mit guter Anfangshaftung sorgt für die Fixierung der Airbag-Abdeckung auf dem Gehäuse ab dem Applikationszeitpunkt. Er nimmt mechanische Zug- und Scherbelastungen auf, die sonst auf Klebestellen wirken würden, die mit einem zweiten langzeit- und temperaturstabilem Haftklebstoff mit geringerer Anfangshaftung versehen sind. Dieser zweite Klebstoff kann seine Klebkraft daher ohne mechanische Belastung durch die an der Kante auftretenden Kräfte entwickeln.

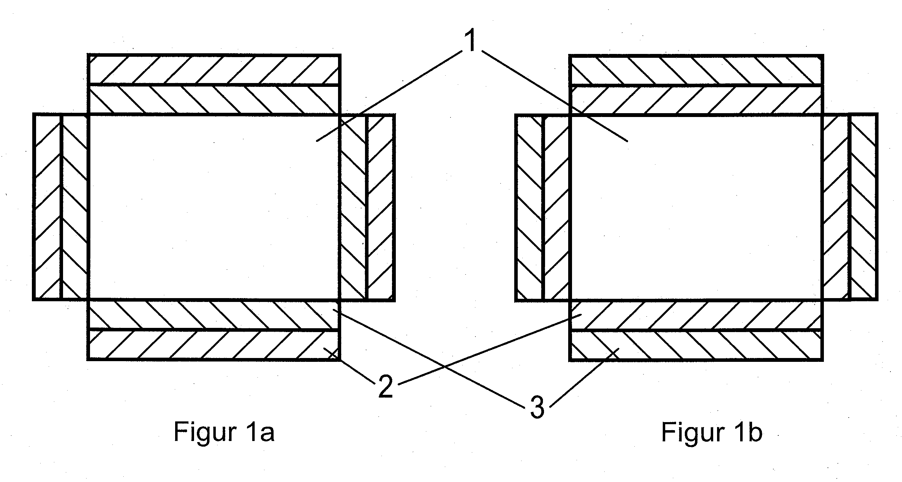

In den Figuren 1a und 1 b sind verschiedene Ausführungsbeispiele der vorliegenden Erfindung näher ausgeführt. Figur 1a stellt eine erfindungsgemäße Ausführung einer Abdeckung, im speziellen einer Airbag-Abdeckung 1 dar, in der am Rand zur Verklebung mit dem Gehäuse ein Klebstoff 2 mit hoher Anfangshaftung, jedoch geringer Temperaturbeständigkeit in der äußersten Zone aufgebracht ist. Weiter zur Mitte der Abdeckung hin befindet sich eine Klebstoffschicht 3 mit geringer Anfangshaftung und sehr guter Temperaturbeständigkeit. Alternativ dazu können Klebstoffschichten 2 und 3 in ihrer Anordnung vertauscht werden, wie in Figur 1 b illustriert. Je nach Bedarf können so die Eigenschaften der Kombination aus den beiden Klebstoffen den äußeren Umständen (beispielsweise Breite und Länge des mit Klebstoff versehenen Streifens oder der Winkel der Kanten) angepasst werden.

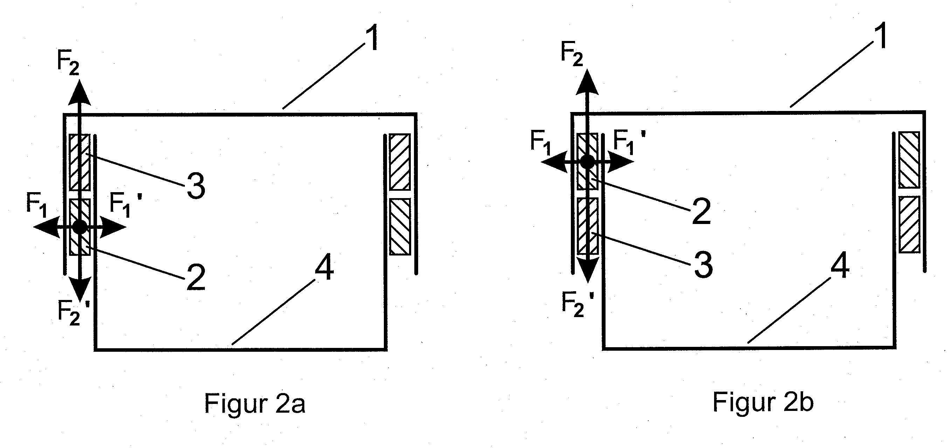

Die Figuren 2a und 2b zeigen die erfindungsgemäßen Abdeckungen aus Figuren 1a und 1 b über die Kante verklebt auf einem Gehäuse 4. Aufgetragen sind hier die Kräfte F₁ und F₂ (Scher- und Zugkräfte), die durch den Klebstoff 2 bei Aufbringung der Abdeckung auf dem Gehäuse neutralisiert werden (Gegenkräfte F₁' und F₂').

Eine erfindungsgemäße Abdeckung dieser Art kann überall dort zum Einsatz kommen, wo Scher- und Zugkräfte bei Verklebung eines folienartigen Abdeckmaterials über eine Kante entstehen und sowohl eine dauerhafte, temperaturstabile Verklebung vonnöten ist als auch eine schnell wirkende Klebewirkung bei der Applikation aufgrund der Kräfteeinwirkung erforderlich ist.

## Patentansprüche

1. Selbstklebende dünnflächige Abdeckung, deren selbstklebende Bereiche aus mindestens zwei Klebstoffen mit unterschiedlichen Hafteigenschaften bestehen, zur Verklebung über eine Kante, **dadurch gekennzeichnet, dass** mindestens einer der Klebstoffe eine hohe Anfangshaftung aufweist, die die Scher- und Zugkräfte, bei Verklebung über die Kante aufhebt und dass mindestens einer der Klebstoffe eine dauerhafte und temperaturstabile Klebewirkung entfaltet.

2. Abdeckung nach Anspruch 1, **dadurch gekennzeichnet, dass** es sich um eine Abdeckung für einen Airbag handelt.
